# FASCICULE DE BREVET EUROPEEN

(11) **EP 3 365 596 B1**
(45) Date de publication et mention de la délivrance du brevet: **26.06.2019**
(21) Numéro de dépôt: 16806224.8
(22) Date de dépôt: 24.10.2016
(51) Int. Cl.: F21S 43/239, F21S 43/243, F21S 43/249, F21S 43/14

(54) **DISPOSITIF D'ÉCLAIRAGE ET/OU DE SIGNALISATION COMPACT POUR VÉHICULE**
KOMPAKTE BELEUCHTUNGS- UND/ODER SIGNALISIERUNGSVORRICHTUNG FÜR FAHRZEUGE
COMPACT LIGHTING AND/OR SIGNALLING DEVICE FOR A VEHICLE

(30) Priorité: 23.10.2015 FR 1560175
(43) Date de publication de la demande: 29.08.2018
(73) Titulaire: Automotive Lighting Rear Lamps France, 89330 Saint-Julien-du-Sault (FR)
(72) Inventeur: BUISSON, Alain, 78190 Trappes (FR); PATTERSON, Sean, 78190 Trappes (FR); SORNIN, Aurélie, 78190 Trappes (FR)
(74) Mandataire: Jacobacci Coralis Harle
(86) Numéro de dépôt international: PCT/FR2016/052760
(87) Numéro de publication internationale: WO 2017/068309

(56) Documents cités:
- EP-A1- 2 857 740
- EP-A2- 2 407 709
- WO-A1-2015/071620
- DE-A1-102006 059 980
- DE-A1-102012 112 076
- DE-A1-102013 225 950
- FR-A1- 2 967 235
- FR-A1- 3 002 895
- FR-A1- 3 046 579

## Description

La présente invention concerne le domaine technique des dispositifs d'éclairage et/ou de signalisation pour véhicule. En particulier, l'invention se rapporte à un dispositif d'éclairage et/ou de signalisation comprenant au moins deux guides de lumière. L'invention concerne également un feu de véhicule comportant un tel dispositif d'éclairage et/ou de signalisation.

Il est connu de l'état de la technique l'utilisation de guides de lumière, éclairés par des diodes électroluminescentes (LEDs), dont les rayons lumineux sont acheminés jusqu'à la sortie du dispositif par l'intermédiaire de guides plats.

Pour réaliser certaines fonctions d'éclairage et/ou de signalisation, il peut être intéressant d'émettre des rayons lumineux selon une bande lumineuse linéaire ou courbée de faible épaisseur, typiquement de l'ordre de quelques millimètres. Ce type de dispositif d'éclairage et/ou de signalisation permet un plus grand nombre d'alternatives dans la conception de phare ou de feu pour un véhicule. Par exemple, les guides de lumière peuvent être agencés différemment dans un même feu de recul, de sorte à assurer une fonction esthétique et ainsi personnaliser le feu en fonction du véhicule. En d'autres termes, les guides de lumière peuvent assurer les fonctions classiques des feux de recul, tout en permettant de remplir une fonction de signature visuelle. Le document EP2407709 A2 divulgue un dispositif d'éclairage et/ou de signalisation comprenant plusieurs bandes lumineuses.

Cependant, un dispositif d'éclairage et/ou de signalisation comprenant plusieurs bandes lumineuses doit avoir une certaine épaisseur afin de pouvoir intercaler les sources de lumière et leur support entre les guides. De plus, les guides de lumière doivent être écartés d'une distance suffisante afin d'éviter que la lumière se propage d'un guide de lumière à un autre, pouvant entraîner une modification de l'intensité et/ou de la colorimétrie de la lumière se propageant dans un guide adjacent. En effet, si cette distance minimale n'est pas respectée, les lumières émises simultanément dans des guides adjacents, peuvent ne plus correspondre aux normes d'éclairage en vigueur dans le secteur de l'automobile par exemple.

Un dispositif d'éclairage et/ou de signalisation comprenant au moins deux guides de lumière doit donc avoir une épaisseur minimale, afin d'assurer son bon fonctionnement. Bien entendu, cette contrainte limite les possibilités d'utilisation et/ou d'agencement des guides de lumière dans un volume restreint, tel qu'un feu de voiture.

En outre, un autre inconvénient lié à ce type de dispositif est la présence des sources de lumière entre les guides. En effet, la lumière émise par les sources de lumière peut se propager entre les deux guides, jusqu'à l'extérieur du dispositif, et ainsi former un halo lumineux au niveau des extrémités des guides de lumière.

La présente demande vise donc à proposer une solution répondant aux différents problèmes techniques mentionnés ci-dessus. En particulier, un but de l'invention est de proposer un dispositif d'éclairage et/ou de signalisation comprenant au moins deux guides de lumière, chaque guide diffusant une lumière sous la forme d'une bande lumineuse de plus grande netteté, tout en optimisant l'épaisseur du dispositif.

Pour cela, la présente demande propose un dispositif d'éclairage et/ou de signalisation extérieur d'un véhicule comprenant :
- une platine de support ayant deux grandes faces parallèles opposées, portant chacune au moins une source de lumière ;
   deux guides principaux de lumière chacun formés par une lame comprenant deux grandes faces, médiale et latérale, sensiblement parallèles et une face de sortie distale de la lumière étant située à distance de la platine, chaque face médiale comprenant au moins une zone d'entrée proximale de la lumière située en relation avec une source de lumière de la platine et à distance de la face de sortie.

L'invention se caractérisé en ce que chaque guide principal comprend en relation avec la zone d'entrée proximale au moins une face de renvoi de la lumière en direction de la face de sortie, chaque face de renvoi étant en partie au moins inclinée par rapport à la face médiale correspondante, et en ce qu'il comprend au moins un écran intercalaire opaque qui est interposé entre les deux guides principaux et qui s'étend parallèlement aux faces médiales en regard de ces dernières entre la platine et une zone située vers les faces de sortie de manière à notamment empêcher le passage de la lumière entre les guides principaux et en ce que l'écran intercalaire est en partie au moins situé entre une grande face de la platine et la face médiale d'un guide principal et comprend au moins une fenêtre de passage de la lumière en regard de chaque source de lumière correspondante.

Afin de faciliter la lecture de la présente description, le terme « guide » sera considéré ci-après synonyme des termes « guide de lumière ». On entend par les termes « zone d'entrée proximale » de la lumière, une zone situé sur une face médiale d'un guide de lumière, parallèle ou sensiblement parallèle à la platine de support, dont au moins une portion de sa surface est éclairée par une source de lumière présente sur la platine. La lumière émise par la source de lumière pénètre donc dans le guide par une zone d'entrée proximale. Selon la présente description, les termes « proximal » et « distal » sont relatifs aux positions des sources de lumières sur la platine de support. Les termes « face de renvoi » désignent une face du guide en vis-à-vis de sa zone d'entrée proximale et réfléchissant au moins partiellement la lumière provenant d'une source de lumière présente sur la platine. La face de renvoi est orientée de sorte à diriger la lumière jusqu'à une face de sortie du guide. Les termes « face de sortie » se rapportent à une face du guide par laquelle la lumière sort. La face de sortie délimite un contour du guide situé au niveau d'une partie distale. Les termes « médial » et latéral » désignent respectivement une grande face d'un guide principal la plus proche ou la plus éloignée de la platine de support.

De façon avantageuse, en interposant l'écran intercalaire opaque entre les guides de lumière, la lumière se propageant dans un guide ne peut pas passer dans un guide adjacent. Ainsi, un dispositif de plus faible épaisseur peut être obtenu en superposant les guides de lumière au plus près, sans risque de diffusion de la lumière d'un guide à un autre. Par exemple, les faces médiales des guides principaux sont écartées d'une distance inférieure ou égale à trois fois l'épaisseur d'un des guides principaux. Selon un autre exemple, les faces médiales des guides principaux sont séparées d'une distance supérieure ou égale à 3 mm, de préférence supérieure à 4 mm et, de manière plus préférée, comprise entre 6 mm et 10 mm.

Selon un autre mode de réalisation, les faces latérales des deux guides principaux sont séparées d'une distance inférieure ou égale à 3 fois l'épaisseur du plus épais des guides principaux. Par exemple, chaque guide principal possède une épaisseur, mesurée entre sa face médiale et sa face latérale, comprise entre 4mm et 10 mm et de préférence comprise entre 4 mm et 8 mm.

Selon une caractéristique de l'invention, les deux guides principaux de lumière sont parallèles entre eux, afin d'optimiser l'épaisseur du dispositif.

La platine peut alors être parallèle aux guides de lumière principaux ou au contraire être inclinée par rapport à ces derniers. Ainsi, selon un mode de réalisation préféré, la platine, située entre les deux guides principaux, est inclinée par rapport à une grande face d'un ou des guides de lumière, de sorte à permettre à un liquide présent à sa surface de s'écouler. Cette inclinaison de la platine permet d'éviter l'accumulation d'eau de condensation à sa surface notamment lorsque les guides sont disposés de manière horizontale sur un véhicule équipé du dispositif selon l'invention. A titre d'exemple, la platine peut être inclinée, par rapport à une grande face d'un guide de lumière, d'un angle compris entre 0° et 10°, ou bien entre 0° et 5°, de sorte à faire s'écouler le liquide en direction d'une face de sortie d'un guide principal. L'angle d'inclinaison est de préférence de l'ordre de 5° afin de permettre l'évacuation de liquide, tout en optimisant l'épaisseur totale du dispositif.

Selon l'invention, l'écran intercalaire opaque est en partie situé entre une grande face de la platine et une face médiale d'un guide principal et comprend au moins une fenêtre de passage de la lumière en regard de chaque source de lumière correspondante. Autrement dit, l'écran intercalaire est en partie agencé entre la platine de support et un guide de lumière, de sorte à recouvrir au moins une partie proximale de la platine de support. Ainsi, l'écran intercalaire opaque peut comprendre une fenêtre pour plusieurs sources de lumière ou une fenêtre pour chaque source de lumière. Dans ce cas, l'écran intercalaire opaque permet également de s'assurer que chaque source de lumière éclaire uniquement une face de renvoi dédiée. L'intensité ainsi que la colorimétrie de la lumière se propageant dans le guide sont ainsi mieux contrôlées.

Selon une caractéristique du dispositif, ce dernier comprend un écran transversal opaque qui s'étend entre les faces médiales des guides principaux, en étant en contact avec ces dernières de manière à masquer les sources de lumière lorsque le dispositif est vu du coté des faces de sortie des guides principaux. En d'autres termes, l'écran transversal opaque empêche également la lumière présente entre les guides d'être visible au niveau de leur face de sortie. Ainsi, l'écran transversal opaque empêche les sources de lumière de former un halo lumineux au niveau des faces de sortie des guides.

De préférence et selon une alternative, l'écran transversal fait partie intégrante de l'écran intercalaire. Autrement dit, l'écran intercalaire et l'écran opaque forment un même écran continu s'étendant le long des guides.

Afin de s'assurer la tenue mécanique du dispositif, l'écran transversal opaque peut être suffisamment rigide pour servir d'entretoise entre les guides de lumière. Selon une alternative, l'écran transversal opaque peut être substitué par l'appendice d'un guide de lumière, dont la surface a été traitée de sorte à être opaque à la lumière émise par les sources de lumière.

Selon un mode de réalisation préféré, chaque guide principal comprend une face de sortie dépassant de la platine de support, de sorte à former une cavité dans laquelle les sources de lumières sont présentes. La cavité peut être est délimitée par l'écran transversal opaque qui est à distante de la platine, afin que la cavité soit de volume suffisamment grand pour permettre la dissipation d'une partie de la chaleur produite par les sources de lumière.

Selon une variante de réalisation, la cavité délimitée par l'écran transversal opaque et les guides principaux peut être fermée sur ses autres côtés par une ou plusieurs membranes hydrophobiques, de sorte à prévenir la présence d'eau due à un phénomène de condensation sur la platine de support.

Selon un exemple de réalisation, l'écran transversal est situé à une distance de la source de lumière la plus proche, supérieure ou égale à deux fois la distance entre les faces médiales des guides principaux. A titre d'exemple, la distance la plus courte entre une source de lumière et l'écran transversal opaque peut être comprise entre 10 mm et 80 mm, de préférence être supérieure à 50 mm. De manière préférée et non limitative, cette distance sera d'autant plus grande que l'écart entre les guides principaux est petit.

Selon une variante de réalisation, les guides principaux possèdent des longueurs différentes, mesurées entre les faces de renvoi et la face de sortie correspondante, l'un des guides principaux étant plus long que l'autre. A titre d'exemple, chaque guide principal possède une longueur, mesurée entre la ou les faces de renvoi et la face de sortie, supérieure à 30 mm et, de préférence, comprise entre 30 mm et 100 mm.

Selon une autre variante de réalisation, l'écran intercalaire et/ou l'écran transversal comprend une extension de support d'un écran au moins translucide situé devant la face de sortie de l'un des guides principaux. En d'autres termes, la partie distale de l'écran opaque peut être utilisée comme support ou surface d'attache pour un écran translucide, transparent et/ou diffusant, positionné devant un guide de lumière. Par les termes « écran diffusant », on désigne une surface diffractant la lumière de manière réduire son éblouissement. A titre d'exemple, un tel écran peut comprendre une surface dépolie. L'écran diffusant peut être formé à partir de PMMA ou de matériaux aux propriétés optiques similaires. Il est à noter que les guides principaux de lumière peuvent être formés à partir des mêmes matériaux.

Selon une caractéristique de l'invention, la platine de support comporte une partie distale se prolongeant au-delà des extrémités proximales des guides principaux de lumière. Autrement dit, la platine de support s'étend au-delà des guides principaux à l'opposé de leur face de sortie. Ainsi, une partie de la platine de support peut dépasser du sandwich formé par les guides de lumière, afin de permettre à une partie de la chaleur produite par les sources de lumière de se dissiper en dehors de la cavité, par conduction thermique dans la platine de support. Afin de favoriser ce phénomène de dissipation thermique, la partie distale de la platine de support peut être en contact avec un échangeur thermique.

Selon un autre mode de réalisation, au moins l'une des grandes faces de la platine porte deux sources de lumière distinctes situées l'une derrière l'autre par rapport à la face de sortie du guide principal correspondant. Cette configuration permet avantageusement de réduire l'écartement entre les sources de lumière assurant une même fonction, ce qui permet d'obtenir un éclairement plus homogène au niveau de la face de sortie éclairée par lesdites sources de lumière.

Selon une variante, la platine de support comporte au moins deux sources de lumière distinctes, éclairant de deux couleurs différentes la face de sortie d'un guide principal de lumière. La platine de support peut également comporter une ou plusieurs sources de lumière, éclairant d'une couleur différente la face de sortie de l'autre guide de lumière. Autrement dit, le dispositif comprend des sources de lumière émettant au moins deux couleurs différentes, de préférence trois. A chaque couleur peut être associé une information sur le déplacement du dispositif. Ces couleurs peuvent par exemple correspondre aux couleurs blanche, ambre et rouge, conformément aux normes colorimétriques en vigueur dans le secteur automobile pour indiquer respectivement le recul (fonction feu de recul), le changement de direction (fonction indicateur de changement de direction), la position (fonction lanterne) et/ou le freinage (fonction feu stop) d'un véhicule éclairé par un dispositif selon l'invention. Il est à noter que la couleur rouge peut indiquer à la fois la position (fonction lanterne) et le freinage ou arrêt (fonction feu stop) du véhicule qui est équipé du dispositif selon l'invention. Pour cela, une même source de lumière de couleur rouge peut émettre une lumière à deux intensités lumineuses différentes, à une première intensité pour signaler le positionnement (fonction lanterne) et à une seconde intensité plus forte pour signaler le freinage (fonction feu stop).

Bien entendu, une source de lumière peut émettre une couleur différente en tant que signature visuelle du dispositif. Le terme « lumière » dans la présente demande désigne au moins une partie du spectre de lumière visible par l'homme. Par les termes « écran opaque », on entend un écran opaque à la lumière. Un écran peut par exemple être rendu opaque en recouvrant l'une au moins de ses faces par un dépôt métallisé et/ou une encre ou un revêtement opaque.

Bien entendu, chaque guide principal peut comprendre plusieurs faces de renvoi permettant à plusieurs sources de lumière d'éclairer la face de sortie du guide.

Selon un exemple de réalisation particulier, l'une des deux sources de lumière située sur la même grande face de la platine s'étend parallèlement à la face de sortie du guide principal correspondant. A titre d'exemple, une face de sortie d'un guide peut ainsi être éclairée par plusieurs sources de lumières distinctes et alignées, de sorte à suivre le contour formé par la face de sortie qu'elles éclairent.

Eventuellement, les deux sources de lumière s'étendent parallèlement sur une partie de leur longueur. Une autre rangée de sources de lumière différentes peut également être agencée sur la platine de support, de manière à éclairer la même face de sortie avec une couleur différente. Une rangée formée par des sources de lumière peut être positionnée devant une autre rangée, afin que la même surface de la face de sortie soit éclairée par deux couleurs différentes, de façon simultanée ou alternativement.

De préférence, chaque source de lumière est formée par un alignement d'au moins deux diodes électroluminescentes ou LEDs. Cet alignement s'étend alors, de préférence, de manière sensiblement parallèle à la face de sortie du guide de lumière correspondant.

Selon une variante de réalisation, les diodes électroluminescentes d'une source de lumière sont alignées et alternent avec les diodes électroluminescentes de l'autre source de lumière.

Selon un mode de réalisation, le dispositif comprend une source de lumière associée à un guide principal et une autre source de lumière associée à un guide secondaire. Le guide secondaire est agencé de manière à diriger la lumière issue de l'autre source de lumière dans le guide principal, afin que sa lumière éclaire la face de sortie du guide principal. Autrement dit, deux guides de lumière distincts peuvent être alignés de sorte que leurs faces de renvoi éclairent la même face de sortie d'un des deux guides.

Selon un autre mode de réalisation, une face de renvoi et/ou de sortie peut comprendre une surface diffusante diffusant la lumière. La surface diffusante peut comprendre au moins un des moyens de diffusions suivants : des stries rectilignes ou courbes, des micro-prismes, des miroirs de Fresnel, des cavités réalisées dans le guide pour améliorer la propagation homogène de la lumière, des rugosités et/ou des dépolis.

Selon un autre mode de réalisation, la ou les surfaces de renvoi de chaque guide présente en relation avec une source de lumière une conformation convexe, vue de l'extérieur du guide. A titre d'exemple, chaque conformation convexe présente sensiblement la forme d'un hémi-paraboloïde dont la concavité est orientée vers la face de sortie.

Selon une réalisation alternative de l'invention, la face latérale d'au moins un guide de lumière est en partie au moins recouverte par un écran externe opaque à la lumière se propageant dans le guide. Par les termes « écran externe », on entend un écran en vis-à-vis d'une face latérale d'un guide.

Selon une autre alternative, la platine de support peut être maintenue entre les guides de lumière par l'intermédiaire de moyens de maintien, positionnés au niveau des extrémités proximales des guides. Bien entendu, les moyens de maintien peuvent permettre de régler précisément cette distance qui peut être inférieure à 30 mm, de préférence inférieure à 2 mm.

Eventuellement, au moins une grande face latérale d'un guide de lumière peut être en appui contre une platine de soutien, maintenue à la platine de support par les moyens de maintien. De préférence, la face de la platine de soutien au contact avec le guide est opaque, de sorte que la lumière se propageant dans le guide soit visible uniquement au niveau de sa face de sortie.

La platine de soutien peut comprendre un dispositif d'attache permettant de fixer le dispositif d'éclairage et/ou de signalisation décrit ci-dessus, dans un feu de véhicule, de sorte que les faces de sortie soient orientées vers l'extérieur du feu. Le dispositif d'attache, comme le dispositif de maintien, peut comprendre des moyens de fixation réversibles et complémentaires, de type vis et pas de vis.

La présente demande concerne également un phare ou feu pour véhicule comprenant un dispositif d'éclairage et/ou de signalisation tel que décrit ci-dessus. Elle adresse également un véhicule intégrant ce feu et comprenant au moins une roue pour permettre le déplacement du véhicule.

Bien entendu, les caractéristiques, différentes variantes et formes de réalisation de l'invention peuvent être associées les unes aux autres selon diverses combinaisons, dans la mesure où elles ne sont pas incompatibles ou exclusives les unes des autres.

Les caractéristiques de l'invention mentionnées ci-dessus, ainsi que d'autres, apparaîtrons plus clairement à la lecture des la description suivantes des exemples de réalisation ci-dessous, en se référant aux dessins annexés sur lesquels :
- la figure 1A est une coupe longitudinale schématique d'un dispositif selon l'invention selon un axe A-A, présent dans un feu arrière d'une voiture ;
- la figure 1B est une coupe longitudinale schématique d'un dispositif selon l'invention selon un axe B-B, présent dans un feu arrière d'une voiture ;
- la figure 2 est une vue de dessus schématique d'une platine de support appartenant au dispositif illustré aux figures 1A et 1B ;
- la figure 3A est une coupe longitudinale schématique et partielle du dispositif illustré à la figure 1A, selon un premier axe A-A ;
- la figure 3B est une coupe longitudinale schématique et partielle du dispositif illustré à la figure 1B, selon un deuxième axe B-B ;
- la figure 3C est un mode de réalisation alternatif de celui illustré à la figure 3B ;
- la figure 3D est un mode de réalisation alternatif de celui illustré à la figure 3C ;
- la figure 4 est une vue de dessus schématique d'une guide de lumière recouvrant la platine de support illustrée à la figure 2 ;
- les figures 5A et 5B sont des variantes de réalisation d'une platine de support représentée en figure 2 ;
- les figures 6A et 6B sont des vues de face et partielles d'un dispositif comprenant une platine de support représentée respectivement aux figures 5A et 5B ;
- La figure 7 illustre une variante du mode de réalisation du dispositif illustré à la figure 1 ; Il est à noter que sur ces figures les éléments structurels et/ou fonctionnels communs aux différentes variantes peuvent présenter les mêmes références.

La présente demande concerne un dispositif d'éclairage et/ou de signalisation comprenant au moins deux guides de lumière de préférence plats, chaque guide diffusant une lumière sous la forme d'une bande lumineuse de grande netteté, en optimisant l'épaisseur du dispositif.

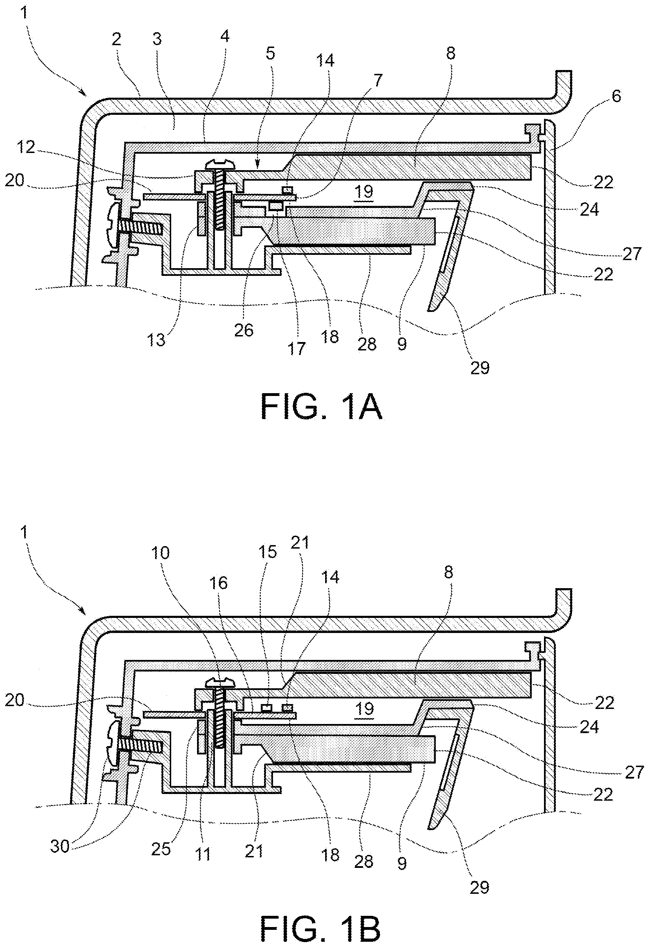

Les figures 1 à 4 illustrent un exemple de réalisation non limitatif de l'invention. Selon cet exemple, l'invention est utilisée comme dispositif d'éclairage et de signalisation dans un feu de recul de voiture.

Plus précisément, une coupe transversale d'un feu arrière **1** de voiture est représentée sur les figures 1A et 1B. La référence **2** désigne un logement présent dans le véhicule et destiné à accueillir le feu arrière **3**. Le feu est composé d'une chambre **4** dans laquelle est présent un dispositif **5** d'éclairage et de signalisation selon l'invention. La face avant du feu est obturée par un écran de protection **6**, à travers lequel le dispositif **5** est visible.

Le dispositif **5** comprend une platine de support **7** maintenue entre deux guides de lumière principaux **8** et **9** de forme plate, par l'intermédiaire de moyen de maintien **10** et **11** (voir figure 1B). La platine de support est maintenue en étau entre les guides de lumière par l'intermédiaire des moyens de maintien, situés respectivement au niveau des extrémités proximales **12** et **13** des guides de lumière principaux **8** et **9**. Selon la présente description, les termes « proximal » et « distal » sont relatifs aux positions des sources de lumières sur la platine de support décrites ci-dessous.

La platine de support **7** est réalisée à partir d'un support de circuit imprimé ou PCB (acronyme de l'expression anglo-saxonne de « Printed Circuit Board »), dont l'épaisseur est de l'ordre de quelques millimètres. La platine de support comporte des pistes électriques (non représentées) permettant de connecter les sources de lumière à un dispositif d'alimentation électrique (non représenté). Les sources de lumières sont composées de diodes électroluminescentes ou LEDs, émettant une lumière de couleur blanche, rouge ou ambre, conformément aux normes colorimétriques en vigueur dans le secteur automobile, pour indiquer respectivement le recul, la position et le changement de direction du véhicule.

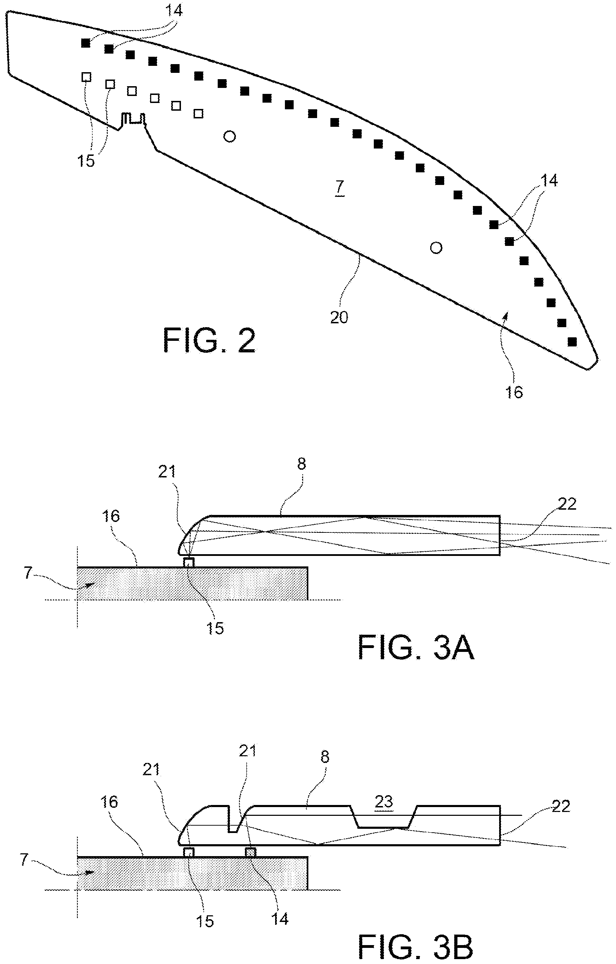

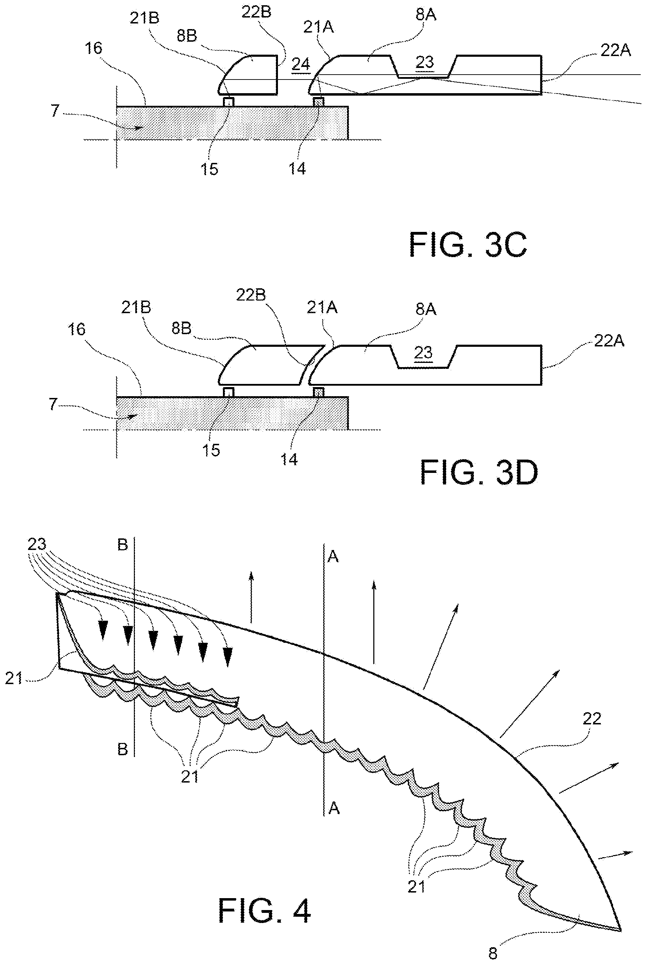

Les figures 1B et 2 montrent un agencement de LEDs de couleurs blanche **14** et de couleur ambre **15** sur une face supérieure **16** de la platine de support. Les LEDs d'une même couleur sont alignées sur la platine de sorte à suivre le contour de l'extrémité distale du guide qu'elles éclairent (voir figure 4). Des LEDs de couleur rouge **17** sont agencées sur une face inférieure **18** de la platine, visibles sur la figure 1A. Selon le présent exemple, les LEDs ont des caractéristiques bien connues de l'homme du métier.

Les guides principaux de lumière forment donc une cavité **19** dans laquelle est présente une partie proximale de la platine de support **7**. Comme son nom l'indique, la platine de support sert de support à plusieurs sources de lumière présentes sur deux de ses faces opposées **16** et **18**. De façon avantageuse, la platine de support comporte une partie distale **20** dépassant de la cavité **19** de manière à permettre une dissipation de la chaleur produite par les sources de lumière à travers la platine de support **7** (voir figure 1B). Selon une variante de réalisation non représentée, un échangeur thermique comportant des ailettes peut être attaché à la partie distale de la platine de support afin d'amplifier ce phénomène de dissipation de chaleur.

Les sources de lumière sont agencées de manière à éclairer au moins une partie d"une face proximale d'un guide principal, plus précisément, une zone d'entrée proximale par laquelle la lumière, émise par les sources de lumière, pénètre dans le guide principal. Les guides principaux de lumière **8** et **9** ont respectivement une zone d'entrée proximale parallèle ou sensiblement parallèle à la platine de support **7.**

Afin de permettre le couplage optique de la lumière dans les guides **8** et **9**, chaque guide comporte une face de renvoi **21** positionnée en vis-à-vis d'une ou plusieurs sources de lumière. Les faces de renvoi sont inclinées par rapport à la face proximale du guide de lumière, selon une valeur comprise entre 30° et 60°, de préférence de l'ordre de 45°.

Comme illustré aux figures 3A à 3D représentant des coupes longitudinales partielles du dispositif **5**, les faces de renvoi sont orientées de manière à réfléchir la lumière passant à travers la zone d'entrée proximale d'un guide, en direction d'une face de sortie **22** délimitant une extrémité distale du guide. La figure 3B représente une autre coupe longitudinale du dispositif **5**, sur laquelle est visible, au niveau d'une face supérieure **16** de la platine de support, une source de lumière de couleur blanche **14** et une source de lumière de couleur ambre **15**. La colorimétrie de ces sources de lumière est conforme aux normes en vigueur dans le secteur de l'automobile. Le guide 8 comporte une face de renvoi **21** positionnée au-dessus de chaque source de lumière. Afin d'optimiser la diffusion de lumière de couleurs différentes, le guide 8 comprend un ou plusieurs creux **23** à sa surface qui sont configurés pour améliorer la propagation homogène de la lumière dans le guide. La figure 4 montre une vue de dessus du guide 8 de lumière, comportant plusieurs faces de renvoi **21** et de creux **23,** agencés de sorte à être en vis-à-vis des sources de lumières représentées sur la figure 2. Les faces de renvoi sont de préférence de forme concave pour orienter plus précisément la lumière en direction de la face de sortie **22**.

Selon une alternative illustrée à la figure 3C, le guide **8** de lumière peut être discontinu entre les deux sources de lumière **14** et **15**. Autrement dit, un passage **24** peut être aménagé dans le guide **8** entre ces sources de lumière et être délimité par une surface de sortie **22B** et une surface de renvoi **21A** alignées optiquement, de sorte que la lumière émise par la source de lumière **15** puisse se propager dans un guide secondaire **8B** puis dans un guide principal **8A** jusqu'à sa face de sortie **22A**.

Selon une variante du mode de réalisation précédent, illustré à la figure 3D, les faces **22A** et **22B** peuvent être parallèles entre elles de sorte à favoriser une meilleure propagation de la lumière du guide de lumière **8B** au guide de lumière **8A**.

La figure 2 est une vue en perspective de la platine de support **7** représentée aux figures 1A et 1B, comprenant sur une de ses faces plusieurs sources de lumières distinctes. Plus précisément, elle comporte des sources de lumière de couleur blanche **14** et des sources de lumière de couleur ambré **15**. La colorimétrie de ces sources de lumière est conforme aux normes en vigueur dans le secteur de l'automobile. Les sources de lumière d'une même couleur sont alignées sur la platine de manière à suivre le contour de la face de sortie **22** du guide **8** qu'elles éclairent. Les sources de lumière de couleur blanche et ambré sont partiellement parallèles entre elles, de manière à pouvoir éclairer avec deux couleurs différentes une même face de sortie du guide **8**, comme décrit ci-dessus et illustré sur la figure 3C.

En d'autres termes, les faces de renvoi **21** permettent à une partie de la lumière émise par les sources de lumière présentes sur la platine de support, de se propager à travers un guide jusqu'à sa face de sortie, par laquelle la lumière sort du guide et est visible sous la forme d'un bandeau lumineux. En fonction de la signature visuelle souhaitée, le contour, l'inclinaison et/ou la forme de la face de sortie peut être modifiée en fonction l'esthétisme recherché. Selon le présent exemple, les faces de sortie **22** des guides **8** et **9** sont normales à leur face proximale et délimitent au niveau de leur extrémité distale un contour de forme courbe (voir figures 1 et 4). Bien entendu, d'autres variantes de réalisation sont possibles, dans lesquelles les faces de sortie sont inclinées, concaves ou convexes et délimitent des contours de guides de formes différentes.

Afin d'amplifier le phénomène de diffusion de la lumière, une face de renvoi **21** et/ou une face de sortie **22** comprennent une surface diffusante permettant de diffuser la lumière. Plus précisément, la surface diffusante comporte au moins l'un des moyens de diffusions suivants : des stries rectilignes ou courbes, des micro-prismes, des miroirs de Fresnel, des rugosités et/ou des dépolis.

L'épaisseur des guides de lumière est de préférence la plus faible possible afin de diminuer l'épaisseur du dispositif **5**. Par le terme « épaisseur », on entend une dimension d'un objet selon un axe normal à une face latérale proximale d'un guide de lumière. L'épaisseur des guides ici décrits est comprise entre 4 mm et 10 mm, elle est de préférence comprise entre 4 mm et 8 mm. La longueur des guides de lumière est supérieure à 30 mm, de préférence comprise entre 30 mm et 100 mm. Par le terme « longueur », on entend une dimension d'un objet selon un axe parallèle à une face proximale d'un guide et passant par ses faces de renvoi et de sortie. Bien entendu, ces valeurs sont adaptables en fonction de l'espace disponible dans le feu et de l'esthétisme recherché. Selon le présent exemple, les guides de lumières **8** et **9** sont de longueurs différentes afin que chaque guide forme un bandeau lumineux visible à une profondeur différente dans le feu arrière **4**, créant ainsi un effet de type « 3 dimensions ». Dans le cas présent, les guides de lumières sont réalisés à partir de polyméthacrylate de méthyle ou PMMA. Cet exemple de réalisation n'est pas limitatif dans la mesure où il est aisé de substituer ce matériau par un autre ayant des propriétés optiques similaires.

Selon l'invention, le dispositif d'éclairage et de signalisation ici présenté, comprend un écran intercalaire **24** opaque interposé entre les guides de lumière **8** et **9**. Comme les guides de lumière, l'écran intercalaire opaque est maintenu à proximité de la platine de support **7** par les moyens de maintien **10** et **11**. Plus précisément, une extrémité proximale de l'écran intercalaire opaque est retenue par les moyens de maintien, entre la platine de support et le guide **9** de lumière. De ce fait, tel qu'illustré à la figure 1B, une partie proximale **25** de l'écran intercalaire **24** opaque est en contact avec la face médiale du guide **9** et en vis-à-vis de la platine de support **7**. Afin de permettre aux sources de lumière présentes sur la platine de support d'éclairer une ou plusieurs faces de renvoi **21** du guide **9**, l'écran intercalaire opaque comporte un ou plusieurs passages **26** prévus à cet effet (voir figure 1A). La partie proximale de l'écran intercalaire opaque permet ainsi de canaliser la lumière de chaque source de lumière pour limiter autant que faire se peut les fuites de lumière. L'intensité lumineuse au niveau de la face de sortie est ainsi mieux contrôlée.

L'écran intercalaire **24** opaque se prolonge le long du guide **9** en direction de sa face de sortie **21**. L'écran intercalaire opaque rejoint l'autre guide **8**, pour s'étendre le long du guide en direction de sa face de sortie **21**. L'écran intercalaire opaque est continu, de sorte qu'il comprend un écran transversal opaque qui obture au moins une partie de la cavité **19** dans laquelle sont présentes les sources de lumière. Plus précisément, l'écran opaque transversal masque les sources de lumière de sorte qu'elles ne soient pas visibles de l'extérieur de la cavité. Ainsi, lors de leur fonctionnement, aucune lumière émise par ces sources n'est visible entre les faces de sortie **21**. L'écran transversal **27** opaque empêche donc le phénomène de halo lumineux mentionné ci-dessus de se produire. De ce fait, la seule lumière visible depuis l'extérieur du dispositif **5** est la lumière émise par les guides de lumière sous forme de bande lumineuse. Ceci a pour effet avantageux d'obtenir une plus grande netteté lumineuse au niveau des faces de sortie des guides de lumière.

De préférence, l'écran transversal **27** opaque est positionné suffisamment loin des sources de lumière pour former une cavité **19** assez grande pour dissiper au moins une partie de la chaleur produite par les sources de lumière. Selon le présent exemple, cette distance est comprise entre 30 mm et 50 mm. Bien entendu, cette distance dépend du type de source de lumière utilisé, de leur nombre et de la longueur des guides de lumière. Cette distance pourra donc être adaptée en fonction de chaque mode de réalisation.

Selon un autre avantage de l'invention, l'écran intercalaire **24** opaque empêche la lumière de passer d'un guide de lumière à un autre. Ainsi, l'écran intercalaire opaque empêche tout phénomène de couplage optique entre les guides, ce qui permet de s'affranchir d'une condition de distance minimale entre les guides afin de préserver la luminosité et la colorimétrie de la lumière se propageant dans chaque guide. Selon le présent exemple, la distance séparant les zones d'entrée des guides de lumière est supérieure à 3 mm, elle est de préférence comprise entre 4 mm et 16 mm.

De préférence, lorsque les guides sont de longueurs différentes, la partie distale de l'écran intercalaire **24** opaque longe le guide le plus long, de sorte à dépasser la face de sortie du guide le plus court. De cette façon, on limite également l'effet d'halo susceptible d'être créé par la lumière diffusant du guide le plus long.

Selon le présent exemple, l'écran intercalaire **24** opaque est formé à partir de PMMA. Il est teinté ou bien recouvert d'une couche de manière à être opaque à la lumière émise par les sources de lumière présentes sur la platine de support **7**.

Afin de supporter une partie du poids du dispositif **5**, une partie du guide **9** de lumière repose contre une platine de soutien **28** (voir figure 1B). La platine de soutien est solidaire du moyen de maintien **11**. La platine de soutien est formée à partir des mêmes matériaux que les guides de lumière.

Dans le même but, l'écran transversal **27** opaque est choisi de manière à être suffisamment rigide pour servir d'entretoise entre les guides de lumière, et reporter une partie du poids du guide **8** sur la platine de soutien **28**. La rigidité de l'écran transversal opaque permet également de s'assurer que les faces d'entrées des guides sont bien parallèles entre elles. A titre d'alternative, l'un des guides peut comporter un appendice jouant le rôle l'écran transversal opaque.

La référence **29** sur les figures 1A et 1B désigne un écran diffusant placé devant la face de sortie **21** du guide **9**. De façon avantageuse, la partie distale de l'écran intercalaire **24** opaque sert de support de fixation pour suspendre l'écran de diffusion **29** devant le guide **9**. Il n'est alors pas nécessaire d'utiliser d'autres moyens pour positionner l'écran diffusant. L'encombrement du dispositif est ainsi réduit. L'écran diffusant est formée à partir des mêmes matériaux que les guides de lumière et il comporte une surface diffusante tel que décrite ci-dessus.

De façon avantageuse, le dispositif **5** comprend un dispositif d'attaches **30** permettant de fixer le dispositif dans le feu **4** (voir figure 1B). Le dispositif d'attache est solidaire de la platine de soutien **28** et du moyen de maintien **11**. Le dispositif d'attache permet d'orienter les faces de sortie **22** vers l'extérieur du feu. De préférence, le dispositif **5** est placé au plus proche d'un bord du feu, de sorte que ledit bord serve d'écran opaque le long du guide **8**.

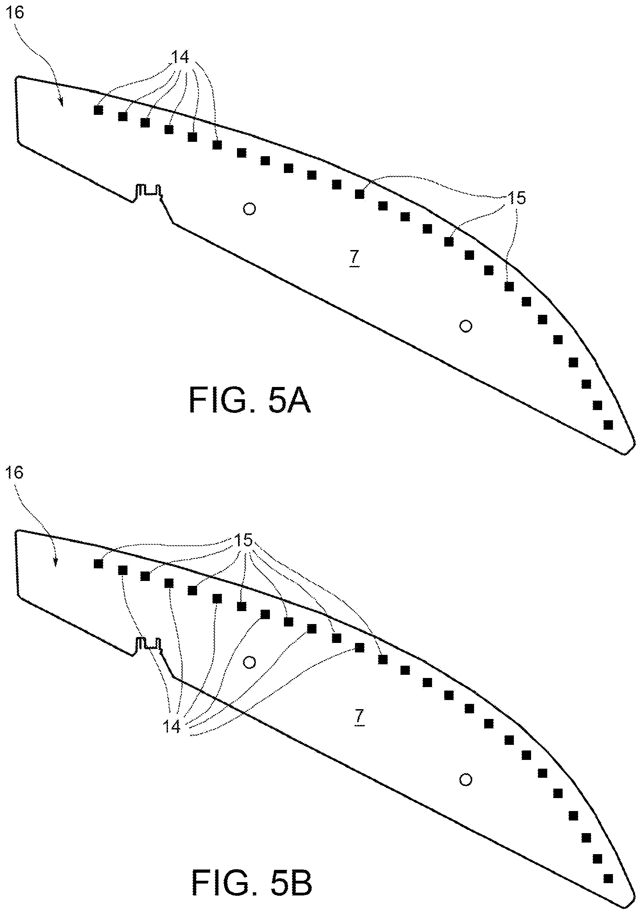

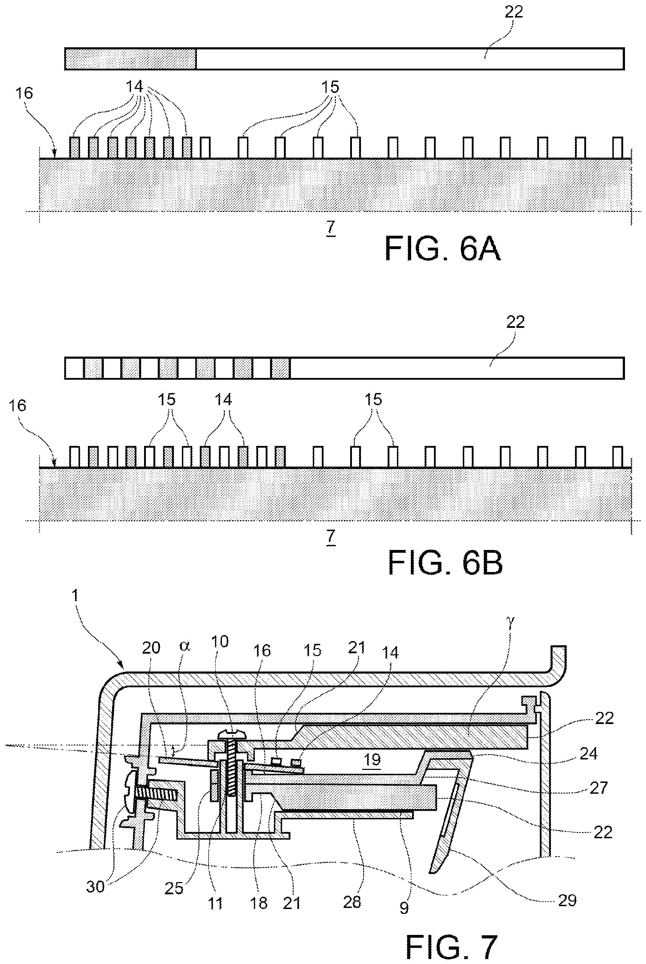

Selon une variante de réalisation du dispositif **5** décrit ci-dessus, les sources de lumières peuvent être agencées différemment sur une même face de la platine de support **7**. Selon le présent exemple illustré à la figure 5A, les sources de lumière de couleur blanche **14** et de couleur ambre **15** sont alignées sur la face supérieure **16** de la platine **7**, une première partie de l'alignement étant composée uniquement de sources de lumière de couleur blanche **14**, une seconde partie de l'alignement étant composée uniquement de sources de lumière de couleur ambre **15**, de sorte à pouvoir obtenir au niveau de la face de sortie **22** du guide **8** qu'elles éclairent le motif représenté à la figure 6A.

Selon une autre variante de réalisation du dispositif **5** illustré à la figure 5B, les sources de lumière de couleur blanche **14** et de couleur ambre **15** alternent sur une partie de leur alignement, de sorte à pouvoir obtenir au niveau de la face de sortie **22** du guide **8** qu'elles éclairent le motif lumineux représenté à la figure 6B.

Selon les exemples de réalisation décrits en relation avec les figures 1A et 1B notamment, la platine **20** est parallèle aux guides de lumière **8** et **9**. Toutefois, une telle configuration n'est pas strictement nécessaire à la réalisation d'un dispositif selon l'invention, ainsi la figure 7 illustre une variante de réalisation du dispositif selon laquelle les guides de lumière **8** et **9** sont parallèles entre eux tandis que la platine support **20** est inclinée vers le guide de lumière inférieur **9** de manière à permettre en cas de formation de condensation sur la platine **20** un écoulement spontané de l'eau dans la chambre 19 de sorte à éviter les désordres susceptibles d'être provoquer par la présence d'eau sur la platine. Dans le cas de cet exemple, la platine **20** est inclinée d'un angle **α** de l'ordre de 5° par rapport à la grande face médiale d'un guide de lumière, le guide supérieur **8** dans le cas présent.

Bien entendu, diverses autres modifications au dispositif selon l'invention peuvent être envisagées dans le cadre des revendications annexées.

## Revendications

1. Dispositif d'éclairage et/ou de signalisation (5) extérieur d'un véhicule comprenant :
- une platine de support (7) ayant deux grandes faces parallèles opposées, portant chacune au moins une source de lumière (14, 15, 17) ;
- deux guides principaux (8,9) de lumière situés de part et d'autre de la platine, chaque guide principal étant formé par une lame comprenant deux grandes faces, médiale et latérale, sensiblement parallèles et une face de sortie (22) distale de la lumière étant située à distance de la platine, chaque face médiale comprenant au moins une zone d'entrée proximale de la lumière située en relation avec une source de lumière de la platine et à distance de la face de sortie ; **caractérisé en ce que** chaque guide principal comprend en relation avec la zone d'entrée proximale au moins une face de renvoi (21) de la lumière en direction de la face de sortie (22), chaque face de renvoi (21) étant en partie au moins inclinée par rapport à la face médiale correspondante, et au moins un écran intercalaire (24) opaque est interposé entre les deux guides principaux (8, 9) et s'étend parallèlement aux faces médiales en regard de ces dernières entre la platine et une zone située vers les faces de sortie de manière à notamment empêcher le passage de la lumière entre les guides principaux (8, 9), et **en ce que** l'écran intercalaire (24) est en partie au moins situé entre une grande face de la platine et la face médiale d'un guide principal et comprend au moins une fenêtre de passage (26) de la lumière en regard de chaque source de lumière correspondante.

2. Dispositif selon la revendication 1, **caractérisé en ce que** les faces médiales des guides principaux (8, 9) sont écartées d'une distance inférieure ou égale à trois fois l'épaisseur d'un des guides principaux.

3. Dispositif selon la revendication 1 ou 2, **caractérisé en ce que** les faces latérales des deux guides principaux (8, 9) sont séparées d'une distance inférieure ou égale à 3 fois l'épaisseur du plus épais des guides principaux.

4. Dispositif selon l'une des revendications 1 à 3, **caractérisé en ce que** la platine (20) est inclinée, par rapport à une grande face d'un guide de lumière.

5. Dispositif selon la revendication 4, **caractérisé en ce que** la platine (20) est inclinée, par rapport à une grande face d'un guide de lumière, d'un angle (α) compris entre 0° et 10°, de préférence de l'ordre de 5°, de sorte à permettre un écoulement de liquide en direction d'une face de sortie (22) d'un guide principal (8, 9).

6. Dispositif selon l'une des revendications 1 à 5, **caractérisé en ce qu'**il comprend un écran transversal (27) opaque qui s'étend entre les faces médiales des guides principaux (8, 9) en étant en contact avec ces dernières de manière à masquer les sources de lumière (14, 15, 17) lorsque le dispositif est vu du côté des faces de sortie des guides principaux.

7. Dispositif selon la revendication 6, **caractérisé en ce que** l'écran transversal (27) est situé à une distance de la source de lumière la plus proche, supérieure ou égale à deux fois la distance entre les faces médiales des guides principaux.

8. Dispositif selon l'une des revendications 1 à 7, **caractérisé en ce que** les guides principaux possèdent des longueurs, mesurées entre les faces de renvoi et la face de sortie correspondante, différentes, l'un des guides principaux étant plus long que l'autre.

9. Dispositif selon l'une des revendications 6 à 8, **caractérisé en ce que** l'écran intercalaire (24) et/ou l'écran transversal (27) comprend une extension de support d'un écran (29) au moins translucide situé devant la face de sortie (22) de l'un des guides principaux.

10. Dispositif selon l'une des revendications 1 à 9, **caractérisé en ce que** la platine de support (7) s'étend au-delà des guides principaux (8, 9) à l'opposé de leur face de sortie (22).

11. Dispositif selon l'une des revendications 1 à 10, **caractérisé en ce qu'**au moins l'une des grandes faces de la platine porte deux sources de lumière distinctes (14, 15), et l'une au moins des deux sources de lumière située sur la même grande face de la platine s'étend parallèlement à la face de sortie du guide principal correspondant.

12. Dispositif selon l'une des revendications 1 à 10, **caractérisé en ce qu'**au moins l'une des grandes faces de la platine porte deux sources de lumière distinctes (14, 15), et les deux sources de lumière s'étendent parallèlement sur une partie au moins de leur longueur.

13. Dispositif selon l'une des revendications 1 à 12, **caractérisé en ce que** la face latérale d'au moins un guide de lumière principal est en partie au moins recouverte par un écran externe opaque (4) à la lumière se propageant dans le guide.

14. Feu (4) pour véhicule comprenant un dispositif selon l'une des revendications 1 à 13.

## Patentansprüche

1. Äußere Beleuchtungs- und/oder Signalisierungsvorrichtung eines Fahrzeugs mit
- einer Trägerplatine (7), die zwei große parallele voneinander abgewandte Seiten aufweist, von denen jede wenigstens eine Lichtquelle (14, 15, 17) trägt,
- zwei beiderseits der Platine angeordneten Hauptlichtleitern (8, 9), wobei jeder Hauptlichtleiter von einer Lamelle gebildet ist, die zwei große, im Wesentlichen zueinander parallele Seiten, eine mediale und eine seitliche, aufweist und eine vom Licht distale Ausgangsseite (22) in einer Entfernung von der Platine gelegen ist, wobei jede mediale Seite wenigstens eine zum Licht proximale Eingangszone aufweist, die in Bezug auf eine Lichtquelle der Platine und in einer Entfernung von der Ausgangsseite gelegen ist,
**dadurch gekennzeichnet, daß**
jeder Hauptleiter in Bezug auf die proximale Eingangszone wenigstens eine Seite (21) zum Reflektieren des Lichts in Richtung auf die Ausgangsseite (22) aufweist, wobei jede Reflexionsseite (21) wenigstens teilweise gegenüber der entsprechenden medialen Seite geneigt ist, und wenigstens ein undurchsichtiger Zwischenschirm (24) zwischen den beiden Hauptleitern (8, 9) eingesetzt ist und sich parallel zu den einander gegenüber liegenden medialen Seiten dieser letzteren zwischen der Platine und einer zu den Ausgangsseiten hin gelegenen Zone erstreckt, um insbesondere das Hindurchgehen des Lichts zwischen den Hauptleitern (8, 9) zu verhindern, und
daß der Zwischenschirm (24) wenigstens teilweise zwischen einer großen Seite der Platine und der medialen Seite eines Hauptleiters gelegen ist und wenigstens ein Fenster (26) für den Durchgang des Lichts gegenüber jeder entsprechenden Lichtquelle aufweist.

2. Vorrichtung gemäß Anspruch 1, **dadurch gekennzeichnet, daß** die medialen Seiten der Hauptleiter (8, 9) voneinander einen Abstand aufweisen, der weniger als oder gleich dem Dreifachen der Dicke eines der Hauptleiter ist.

3. Vorrichtung gemäß Anspruch 1 oder 2, **dadurch gekennzeichnet, daß** die seitlichen Seiten der beiden Hauptleiter (8, 9) voneinander einen Abstand aufweisen, der weniger als oder gleich dem Dreifachen der Dicke des dickeren der Hauptleiter ist.

4. Vorrichtung gemäß einem der Ansprüche 1 bis 3, **dadurch gekennzeichnet, daß** die Platine (20) gegenüber einer großen Seite eines Lichtleiters geneigt ist.

5. Vorrichtung gemäß Anspruch 4, **dadurch gekennzeichnet, daß** die Platine (20) gegenüber einer großen Seite eines Lichtleiters um einen Winkel (α) zwischen 0° und 10°, vorzugsweise um etwa 5°, geneigt ist, um ein Abfließen von Flüssigkeit in Richtung auf eine Ausgangsseite (22) eines Hauptleiters (8, 9) hin zu ermöglichen.

6. Vorrichtung gemäß einem der Ansprüche 1 bis 5, **dadurch gekennzeichnet, daß** sie einen undurchsichtigen Querschirm (27) aufweist, der sich zwischen den medialen Seiten der Hauptleiter (8, 9) erstreckt und dabei mit diesen letzteren in Kontakt ist, um die Lichtquellen (14, 15, 17) zu verdecken, wenn die Vorrichtung von der Seite der Ausgangsseiten der Hauptleiter her betrachtet wird.

7. Vorrichtung gemäß Anspruch 6, **dadurch gekennzeichnet, daß** der Querschirm (27) von der nächstgelegenen Lichtquelle in einer Entfernung gelegen ist, die größer als oder gleich dem Doppelten der Entfernung zwischen den medialen Seiten der Hauptleiter ist.

8. Vorrichtung gemäß einem der Ansprüche 1 bis 7, **dadurch gekennzeichnet, daß** die Hauptleiter, zwischen den reflektierenden Seiten und der entsprechenden Ausgangsseite gemessen, verschiedene Längen aufweisen, wobei einer der Hauptleiter länger als der andere ist.

9. Vorrichtung gemäß einem der Ansprüche 6 bis 8, **dadurch gekennzeichnet, daß** der Zwischenschirm (24) und/oder der Querschirm (27) eine Verlängerung zum Tragen eines wenigstens durchscheinenden Schirms (29) aufweist, der vor der Ausgangsseite (22) eines der Hauptleiter angeordnet ist.

10. Vorrichtung gemäß einem der Ansprüche 1 bis 9, **dadurch gekennzeichnet, daß** sich die Trägerplatine (7) über die Hauptleiter (8, 9) hinaus von deren Ausgangsseite (22) abgewandt erstreckt.

11. Vorrichtung gemäß einem der Ansprüche 1 bis 10, **dadurch gekennzeichnet, daß** wenigstens eine der großen Seiten der Platine zwei verschiedene Lichtquellen (14, 15) trägt und sich wenigstens eine der auf derselben großen Seite der Platine gelegenen Lichtquellen parallel zur Ausgangsseite des entsprechenden Hauptleiters erstreckt.

12. Vorrichtung gemäß einem der Ansprüche 1 bis 10, **dadurch gekennzeichnet, daß** wenigstens eine der großen Seiten der Platine zwei verschiedene Lichtquellen (14, 15) trägt und sich die beiden Lichtquellen wenigstens über einen Teil ihrer Länge parallel erstrecken.

13. Vorrichtung gemäß einem der Ansprüche 1 bis 12, **dadurch gekennzeichnet, daß** die seitliche Seite wenigstens eines Hauptlichtleiters wenigstens teilweise durch einen äußeren Schirm (4) verdeckt ist, der für das sich im Leiter ausbreitende Licht undurchlässig ist.

14. Lampe (4) für ein Fahrzeug, die eine Vorrichtung gemäß einem der Ansprüche 1 bis 13 aufweist.

## Claims

1. An external lighting and/or signalling device (5) for a vehicle, comprising:
- a support plate (7) having two large, opposite and parallel faces, each carrying at least one light source (14, 15, 17);
- two main light guides (8, 9), located on either side of the plate, each main guide being formed by a blade comprising two large faces, a medial and a lateral one, substantially parallel to each other, and a distal light exit face (22) located remote from the plate, each medial face comprising at least one proximal light entry zone located in relation with a light source of the plate and remote from the exit face;
**characterized in that** each main guide comprises, in relation with the proximal entry zone, at least one face (21) for reflecting the light towards the exit face (22), each reflective face (21) being at least in part inclined with respect to the corresponding medial face, and **in that** it comprises at least one opaque insert screen (24) that is interposed between the two main guides (8, 9) and that extends parallel to the medial faces, opposite these latter, between the plate and a zone located towards the exit faces so as, in particular, to prevent the passage of the light between the main guides (8, 9), and **in that** the insert screen (24) is at least in part located between a large face of the plate and the medial face of a main guide and comprises at least one light-through window (26) opposite each corresponding light source.

2. The device according to claim 1, **characterized in that** the medial faces of the main guides (8, 9) are spaced apart by a distance lower than or equal to three times the thickness of one of the main guides.

3. The device according to claim 1 or 2, **characterized in that** the lateral faces of the two main guides (8, 9) are separated by a distance lower than or equal to three times the thickness of the thicker of the main guides.

4. The device according to one of claims 1 to 3, **characterized in that** the plate (20) is inclined with respect to a large face of a light guide.

5. The device according to claim 4, **characterized in that** the plate (20) is inclined, with respect to a large face of a light guide, by an angle (α) comprised between 0° and 10°, preferably of the order of 5°, so as to allow a flowing of liquid towards an exit face (22) of a main guide (8, 9).

6. The device according to one of claims 1 to 5, **characterized in that** it comprises an opaque transverse screen (27) that extends between the medial faces of the main guides (8, 9), while being in contact with these latter so as to mask the light sources (14, 15, 17) when the device is viewed from the side of the exit faces of the main guides.

7. The device according to claim 6, **characterized in that** the transverse screen (27) is located at a distance from the closest light source that is higher than or equal to twice the distance between the medial faces of the main guides.

8. The device according to one of claims 1 to 7, **characterized in that** the main guides have different lengths, measured between the reflective faces and the corresponding exit face, one of the main guides being longer than the other.

9. The device according to one of claims 6 to 8, **characterized in that** the insert screen (24) and/or the transverse screen (27) comprises an extension for supporting an at least translucent screen (29) located in front of the exit face (22) of one of the main guides.

10. The device according to one of claims 1 to 9, **characterized in that** the support plate (7) extends beyond the main guides (8, 9), opposite their exit face (22).

11. The device according to one of claims 1 to 10, **characterized in that** at least one of the large faces of the plate carries two distinct light sources (14, 15), and **in that** one at least of the two light sources located on the same large face of the plate extends parallel to the exit face of the corresponding main guide.

12. The device according to one of claims 1 to 10, **characterized in that** each light source is formed by an alignment of at least two light-emitting diodes (14, 15) and the two light sources extend parallel to each other over a portion at least of their length.

13. The device according to one of claims 1 to 12, **characterized in that** the lateral face of at least one main light guide is at least in part covered by an outer screen (4) opaque to the light propagating in the guide.

14. A lamp (4) for a vehicle comprising a device according to one of claims 1 to 13.
